# FASCICULE DE BREVET EUROPEEN

(11) **EP 4 036 544 B1**
(45) Date de publication et mention de la délivrance du brevet: **03.05.2023**
(21) Numéro de dépôt: 22153717.8
(22) Date de dépôt: 27.01.2022
(51) Int. Cl.: G01L 13/02, G01L 19/06, G01L 19/04

(54) **CAPTEUR DE PRESSION DIFFÉRENTIEL MUNI D'UN DISPOSITIF DE SÉCURITÉ DE SURPRESSION**
DIFFERENZIALDRUCKSENSOR MIT EINER VORRICHTUNG ZUR ÜBERDRUCKSICHERUNG
DIFFERENTIAL PRESSURE SENSOR PROVIDED WITH AN OVERPRESSURE SAFETY DEVICE

(30) Priorité: 29.01.2021 FR 2100880
(43) Date de publication de la demande: 03.08.2022
(73) Titulaire: ArianeGroup SAS, 78130 Les Mureaux (FR)
(72) Inventeur: CHABRERIE, Yan, 46000 Cahors (FR); GOUBERT, François, 33185 Le Haillan (FR)
(74) Mandataire: Cabinet Beau de Loménie

(56) Documents cités:
- WO-A1-2019/122759
- DE-U- 1 800 475
- FR-A1- 2 600 769

## Description

### Domaine Technique

La présente invention se rapporte au domaine général des capteurs pour mesurer la pression d'un fluide par mesure de la différence de pression entre une pression de référence et une pression à mesurer.

### Technique antérieure

Les capteurs de pression de l'art antérieur comprennent généralement une première ligne et une deuxième ligne d'entrée de fluide. L'une des deux lignes d'entrée correspond à la ligne de référence par laquelle un fluide avec une pression de référence qui est connue est introduit dans le capteur de pression, et l'autre ligne correspond à la ligne de mesure par laquelle un fluide avec une pression à mesurer est introduit dans ledit capteur de pression.

Ces capteurs de pression sont généralement bidirectionnels, rendant possible le cas où la première ligne d'entrée est la ligne de référence tandis que la deuxième ligne d'entrée est la ligne de mesure, ainsi que le cas où la première ligne d'entrée est la ligne de mesure tandis que la deuxième ligne d'entrée est la ligne de référence.

Un exemple de ce type de capteur est décrit à partir de la figure 1 du document WO 2019 122759 A1. Afin de mesurer la différence de pression entre les deux lignes d'entrées, ce capteur de pression comprend une tige de mesure sur laquelle la pression des deux lignes d'entrées est exercée. La tige de mesure est fixée par une extrémité, l'autre extrémité étant libre de se déplacer. Une jauge extensométrique est disposée sur la tige de mesure de manière à mesurer la déformation de ladite tige de mesure et ainsi obtenir la différence de pression entre les deux lignes d'entrées à partir de la déformation de la tige de mesure.

Le capteur de pression comprend deux membranes qui sont situées en regard de chaque ligne d'entrée. Les membranes sont destinées à être soumises chacune à la pression du fluide d'une des lignes d'entrées et à transmettre chacune cette pression à la tige de mesure via une tige de transmission. La cavité définie par l'espace entre les membranes est remplie d'huile afin de limiter la variation de volume de ladite cavité.

Cependant, ce capteur de l'état de la technique rencontre un problème de résistance à la surpression. En effet, afin de limiter le déplacement des tiges de transmission et la flexion de la tige de mesure, lesdites tiges de transmission possèdent des butées. Toutefois, la membrane située du côté opposé à la ligne sur laquelle se produit la surpression tend à se déformer en gonflant vers l'extérieur de la cavité sous l'effet du déplacement d'huile au sein de la cavité, ce qui peut provoquer un endommagement de ladite membrane. Ce type de capteur présente de surcroit des problèmes de sensibilité à la température et à la pression de référence.

Afin de limiter les inconvénients précités, le document WO 2019 122759 A1 décrit un capteur de pression présenté sur la figure 1.Ce capteur de pression 10 est caractérisé en ce que le corps de mesure 30 est relié mécaniquement uniquement à la première membrane 20a par un organe de connexion 50, le corps de mesure 30 comprenant une forme possédant une symétrie centrale.

Le capteur de pression 10 mesure une différence de pression entre une première pression P1 appliquée sur la première membrane 20a et une deuxième pression P2 appliquée la deuxième membrane 20b grâce au fait que la deuxième pression P2 appliquée la deuxième membrane 20b est transférée sur la première membrane 20a via le liquide remplissant le capteur de pression 10, de sorte que la force appliquée sur le corps de mesure 30 par la première membrane 20a via l'organe de connexion 50 correspond à la différence entre la première pression P1 et la deuxième pression P2. La mesure de la déformation du corps de mesure 30 par la jauge extensométrique 31 permet de mesurer la force appliquée sur ledit corps de mesure 30 par la première membrane 20a, et ainsi d'obtenir la différence de pression entre la ligne de référence et la ligne de mesure.

Ainsi, la dilatation thermique du liquide remplissant le capteur de pression 10 est compensée par un gonflement de la deuxième membrane 20b, un tel gonflement étant rendu possible par le fait que ladite deuxième membrane 20b n'est pas reliée mécaniquement au corps de mesure 30. De plus, le caractère bidirectionnel du capteur de pression est amélioré, le rendant moins sensible à la valeur de la pression de référence.

Le dispositif de sécurité de surpression est formé par un premier clapet de surpression 42a et un deuxième clapet de surpression 42b, tous les deux mobiles entre une position ouverte dans laquelle ils autorisent la circulation de liquide entre la première chambre 13a et la deuxième chambre 13b, et une position fermée dans laquelle ils empêchent la circulation de liquide entre les deux chambres.

Le premier clapet de surpression 42a passe dans sa position fermée lorsque la première pression P1 devient trop importante suite à une surpression. Le premier clapet de surpression 42a passe dans sa position fermée par écrasement de la première membrane 20a sous l'effet de l'augmentation de la première pression P1, un disque 21a disposé sous la membrane (ici formé par une extrémité de l'organe de connexion 50) venant obturer le premier clapet de surpression 42a.

Le deuxième clapet de surpression 42b passe dans sa position fermée lorsque la deuxième pression P2 devient trop importante suite à une surpression. Le deuxième clapet de surpression 42b passe dans sa position fermée par écrasement du corps de mesure 30 contre la deuxième face du support de fixation 40. La déformation du corps de mesure 30 est provoquée par l'augmentation de la pression du liquide dans la deuxième chambre 13b.

Ce dispositif de sécurité de surpression présente de nombreux inconvénients. Tout d'abord, il ne permet pas de garantir la fiabilité du capteur après une surpression. En effet, le dispositif fonctionne par écrasement de pièces peu élastiques. Le dispositif peut également présenter des fuites conséquentes entre la première et la deuxième chambre contenant le liquide lorsque l'un des deux clapets est en position fermé. Enfin, ce dispositif ne permet pas une miniaturisation aisée et peu coûteuse, nécessaire pour la réalisation de capteurs de pression de faibles dimensions. Les documents FR 2 600 769 A1 et DE 18 00 475 U présentent d'autres exemples de capteurs similaires.

### Exposé de l'invention

La présente invention a pour but principal de résoudre les inconvénients précités, en proposant un capteur de de pression fermé à une première extrémité par une première membrane et à une deuxième extrémité par une deuxième membrane, comprenant un organe central suivant un premier axe fixé à au moins une des membranes, le capteur de pression étant caractérisé en ce que l'organe central comprend une rondelle flexible concentrique s'étendant à partir de l'organe central selon un deuxième axe perpendiculaire au premier axe jusqu'à une portion terminale libre flexible, le capteur comprenant en outre une butée présentant une face supérieure et une face inférieure en regard l'une de l'autre et concentriques autour du premier axe, la face supérieure et la face inférieure définissant un espace dans lequel est présent la portion terminale de la rondelle, de sorte que la rondelle soit en contact de façon étanche avec la face inférieure ou la face supérieure lorsque la différence de pression entre une première pression exercée sur la première membrane et une deuxième pression exercée sur la deuxième membrane dépasse une valeur seuil.

Ainsi, le dispositif de sécurité de surpression est assuré par la présence d'une ou plusieurs rondelles flexibles, qui représentent une solution peu coûteuse et aisée à miniaturiser. De plus, le caractère flexible des rondelles permet d'assurer une déformation réversible des rondelles lors d'une surpression et de ne pas endommager les autres composants du capteur. Ainsi, la fiabilité du capteur est conservée même après une surpression. Enfin, les rondelles assurent une étanchéité satisfaisante entre les deux chambres du capteur présentant des pressions fortement différentes lors d'une surpression.

Selon une caractéristique particulière de l'invention, les faces supérieures et inférieures de la butée présentent un angle par rapport au deuxième axe compris entre 10° et 45°.

Selon une autre caractéristique de l'invention, l'organe central comprend une première rondelle flexible présente entre une deuxième rondelle et une troisième rondelle flexibles concentriques à ladite première rondelle, les portions libres des deuxième et troisième rondelles étant en retrait par rapport à la portion libre de la première rondelle afin d'assurer un double contact étanche avec les faces de la butée lorsque la différence de pression entre les deux membranes dépasse la valeur seuil.

Selon une autre caractéristique de l'invention, l'organe central comprend une première rondelle flexible présente entre une deuxième rondelle et une troisième rondelle flexibles concentriques à ladite première rondelle, l'ensemble formé par ces trois rondelles étant lui-même présent entre une quatrième rondelle et une cinquième rondelle flexibles concentriques audit ensemble, les portions libres des deuxième et quatrième rondelles et des troisième et cinquième rondelles étant en retrait progressif par rapport à la portion libre de la première rondelle afin d'assurer un triple contact étanche avec les faces de la butée lorsque la différence de pression entre les deux membranes dépasse la valeur seuil.

Selon une autre caractéristique particulière de l'invention, le capteur de pression contient de l'huile.

Selon une autre caractéristique de l'invention, le capteur de pression comprend un corps de mesure relié mécaniquement à l'une des membranes par l'organe central, le corps de mesure comprenant une jauge extensométrique et une forme présentant une symétrie centrale.

### Brève description des dessins

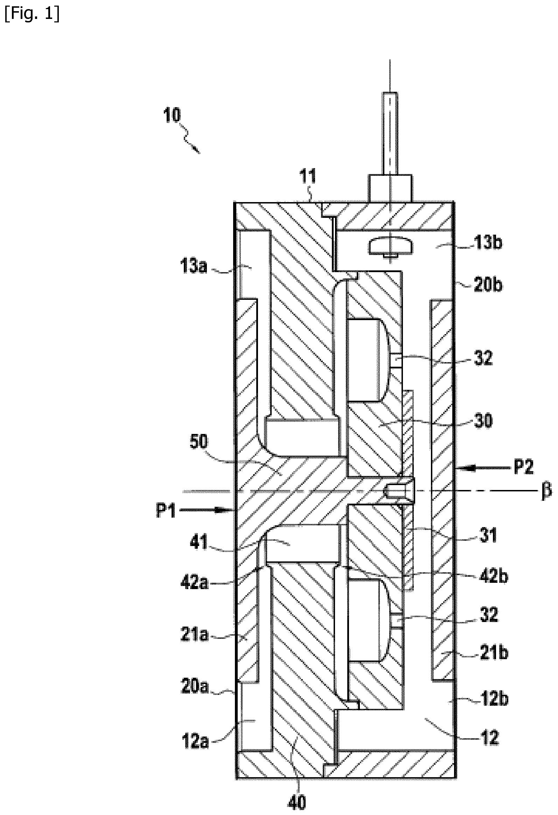

[Fig. 1] La figure 1 illustre un capteur de pression différentiel de l'état de la technique.
[Fig. 2] La figure 2 présente une vue en coupe d'un capteur de pression comprenant une rondelle selon un mode de réalisation de l'invention, lorsque la différence de pression entre les membranes ne dépasse pas la valeur seuil.
[Fig.3] La figure 3 présente une vue en coupe d'un capteur de pression comprenant trois rondelles selon un mode de réalisation de l'invention, lorsque la différence de pression entre les membranes ne dépasse pas la valeur seuil.
[Fig. 4] La figure 4 présente une vue en coupe d'un capteur de pression comprenant cinq rondelles selon un mode de réalisation de l'invention, lorsque la différence de pression entre les membranes ne dépasse pas la valeur seuil.
[Fig. 5] La figure 5 présente une vue partielle de la coupe du capteur de pression de la figure 4, lorsque la différence de pression entre les membranes dépasse la valeur seuil.

### Description des modes de réalisation

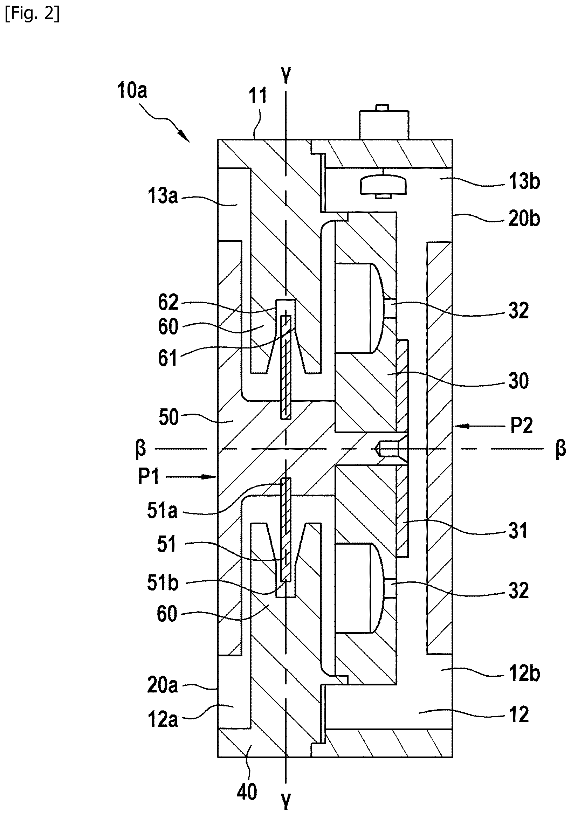

Les figures 2, 3, 4 et 5 présentent chacune trois exemples de capteur de pression selon l'invention. Ces capteurs de pression 10a, 10b et 10c comprennent une paroi 11 cylindrique dirigée selon un axe β qui délimite une cavité 12, ladite cavité 12 étant remplie par un liquide. De préférence, le liquide remplissant la cavité 12 du capteur de pression 10 est de l'huile, l'huile étant faiblement compressible.

La cavité 12 comprend une première extrémité 12a qui est fermée par une première membrane 20a, et une deuxième extrémité 12b qui est fermée par une deuxième membrane 20b. La première membrane 20a et la deuxième membrane 20b sont destinées à installées l'une sur une ligne de référence et l'autre sur une ligne de mesure. La ligne de référence est une ligne comprenant un fluide dont la pression est connue, de manière à pouvoir calculer la pression du fluide de la ligne de mesure grâce à la différence de pression entre la ligne de référence et la ligne de mesure.

Un corps de mesure 30 est situé dans la cavité 12, entre la première membrane 12a et la deuxième membrane 12b. Le corps de mesure 30 comprend une jauge extensométrique 31 installée sur ledit corps de mesure 30, et qui est configurée pour mesurer la déformation dudit corps de mesure 30. Le corps de mesure 30 comprend une forme possédant une symétrie centrale. Le corps de mesure comprend donc un centre de symétrie. Le centre de symétrie du corps de mesure est de préférence situé sur l'axe β.

Afin de fixer le corps de mesure 30 à l'intérieur de la cavité 12, la paroi interne de la cavité 13 comprend un support de fixation 40 qui d'une part est fixé à la paroi 11 du capteur de pression 10, et d'autre part sur lequel est fixé le corps de mesure 30. La forme du support de fixation 40 et la fixation avec le corps de mesure 30 sont adaptées pour que ledit corps de mesure 30 puisse se déformer par flexion, ainsi les points de fixation entre le support de fixation 40 et le corps de mesure 30 sont espacés dudit support de fixation 40.

Dans les exemples de réalisation illustrés sur les figures 2, 3 et 4, le corps de mesure 30 est un disque centré sur l'axe β, le centre de symétrie dudit corps de mesure 30 étant donc situé au centre du disque, sur l'axe β. Le support de fixation 40 est également un disque qui comprend une nervure circulaire qui s'engage dans une rainure circulaire complémentaire réalisée sur le contour du corps de mesure 30, assurant ainsi la fixation dudit corps de mesure 30 sur le support de fixation 40.

Un organe central 50 d'axe β relie mécaniquement le centre de symétrie du corps de mesure 30 à une membrane parmi la première membrane 20a et la deuxième membrane 20b. Dans les exemples illustrés sur les figures 2, 3 et 4, l'organe de connexion 50 relie le corps de mesure 30 à la première membrane 20a. L'organe de connexion 50 comprend donc une première extrémité en contact avec la première membrane 20a et une deuxième extrémité en contact avec le centre de symétrie du corps de mesure 30. La deuxième extrémité de l'organe de connexion 50 est fixée au corps de mesure 30 afin que le corps de mesure 30 suivent bien tous les mouvements de l'organe de connexion 50.

L'autre membrane, ici la deuxième membrane 20b, n'est pas reliée mécaniquement au corps de mesure 30, contrairement au capteur de l'état de la technique. Par « liaison mécanique » on entend ici que les efforts appliqués sur la membrane sont transmis au corps de mesure 30 via une pièce, telle que par exemple une tige, la pièce transmettant également les efforts du corps de mesure vers la membrane.

Les capteurs de pression 10a, 10b et 10c mesurent une différence de pression entre une première pression P1 appliquée sur la première membrane 20a et une deuxième pression P2 appliquée la deuxième membrane 20b grâce au fait que la deuxième pression P2 appliquée la deuxième membrane 20b est transférée sur la première membrane 20a via le liquide remplissant le capteur de pression, de sorte que la force appliquée sur le corps de mesure 30 par la première membrane 20a via l'organe central 50 correspond à la différence entre la première pression P1 et la deuxième pression P2. La mesure de la déformation du corps de mesure 30 par la jauge extensométrique 31 permet de mesurer la force appliquée sur ledit corps de mesure 30 par la première membrane 20a, et ainsi d'obtenir la différence de pression entre la ligne de référence et la ligne de mesure.

Comme visible sur les figures 2, 3 et 4, la cavité 12 du capteur de pression 10 est divisée en deux chambres par le corps de mesure 30 et le support de fixation 40, une première chambre 13a située du côté de la première membrane 20a, et une deuxième chambre 13b située du côté de la deuxième membrane 20b. Le support de fixation 40 comprend un perçage 41 pour laisser passer l'organe central 50, et pour laisser circuler le fluide entre la première chambre 13a et la deuxième chambre 13b. Le corps de mesure 30 comprend également des perçages 32 afin de laisser circuler le fluide entre la première chambre 13a et la deuxième chambre 13b. Ainsi, tout mouvement de la première membrane 20a ou de la deuxième membrane 2b entraine un déplacement de liquide entre la première chambre 13a et la deuxième chambre 13b.

Le capteur de pression 10a présenté sur la figure 2 comprend un dispositif de sécurité de surpression qui comprend une unique rondelle 51 et une butée 60. La rondelle 51 est fixée sur l'organe central 50 de sorte que la rondelle 51 et l'organe central 50 soient concentriques. La rondelle 51 s'étend perpendiculairement à l'axe β selon une direction radiale γ. Ainsi, le bord interne 51a de la rondelle 51 est fixé à l'organe central 50, tandis que le bord externe 51b de la rondelle 51, appelé également portion terminale, est libre. La rondelle 51 peut être fixée à l'organe central par soudage, ou montée grâce à ses propriétés flexibles.

La butée 60 est fixée sur le support de fixation 40, de sorte que la butée 60 et la rondelle 51 soient concentriques. La butée 60 comprend une face supérieure 61 et une face inférieure 62 en regard l'une de l'autre, présentes sur toute la circonférence du capteur de sorte à définir un espace dans lequel est présent le bord externe 51b de la rondelle 51.

La portion terminale 51b de la rondelle 51 est mobile entre une position ouverte dans laquelle elle autorise la circulation de liquide entre la première chambre 13a et la deuxième chambre 13b, et deux positions fermées dans lesquelles elle empêche la circulation de liquide entre les deux chambres.

La rondelle 51 passe dans sa première position fermée lorsque la première pression P1 devient trop importante suite à une surpression et qu'ainsi la différence de pression ΔP entre la première pression P1 et la deuxième pression P2 (ΔP = P1-P2) atteint une première valeur limite. La rondelle 51 passe dans cette position fermée par écrasement étanche de sa portion terminale 51b contre la face supérieure 61 de la butée 60 sous l'effet de l'augmentation de la première pression P1.

La rondelle 51 passe dans sa deuxième position fermée lorsque la deuxième pression P2 devient trop importante suite à une surpression et qu'ainsi la différence de pression ΔP entre la deuxième pression P2 et la première pression P1 (ΔP = P2-P1) atteint une deuxième valeur limite. La rondelle 51 passe dans cette position fermée par écrasement étanche de sa portion terminale 51b contre la face inférieure 62 de la butée 60 sous l'effet de l'augmentation de la deuxième pression P2.

La rondelle 51 est réalisée dans un matériau flexible mais solide, dont la limite élastique est importante, afin de permettre le fonctionnement décrit précédemment en cas de surpression. Les rondelles peuvent par exemple être réalisées en acier. Les rondelles peuvent par exemple avoir une limite élastique comprise entre 1100 et 1200 MPa.

Dans l'exemple de réalisation présenté sur la figure 2, les faces 61 et 62 sont parallèles et s'étendent selon la direction γ. Cependant, on ne sort pas du cadre de l'invention si les faces de la butée sont inclinées par rapport à la direction γ.

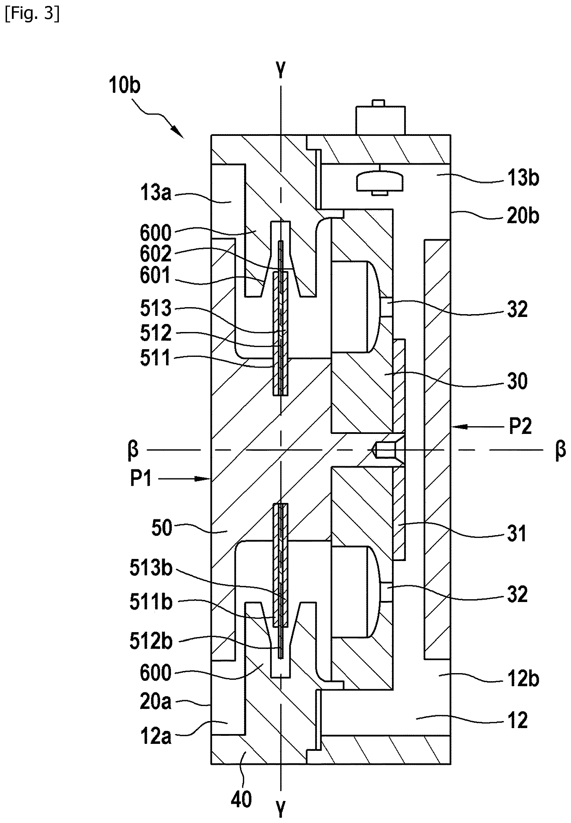

Le capteur de pression 10b présenté sur la figure 3 comprend un dispositif de sécurité de surpression qui comprend une butée 600 et trois rondelles 511, 512 et 513 superposées dans l'ordre dans la direction β. Les rondelles 511, 512 et 513 sont fixées sur l'organe central 50 de sorte que les rondelles 511, 512 et 513 et l'organe central 50 soient concentriques. Les rondelles 511, 512 et 513 s'étendent perpendiculairement à l'axe β selon une direction radiale γ. Ainsi, les bords internes 511a, 512a et 513a respectivement des rondelles 511, 512 et 513 sont fixés à l'organe central 50, tandis que les bords externes 511b, 512b et 513b respectivement des rondelles 511, 512 et 513, appelés également portions terminales, sont libres. Les rondelles 511, 512 et 513 peuvent être fixées à l'organe central par soudage, ou montées grâce à leurs propriétés flexibles.

Les portions libres 511b et 513b des rondelles 511 et 513 sont en retrait selon la direction γ par rapport à la portion libre 512b de la rondelle 512, située entre les rondelles 511 et 513.

La butée 600 est fixée sur le support de fixation 40, de sorte que la butée 600 et les rondelles 511, 512 et 513 soient concentriques. La butée 600 comprend une face supérieure 601 et une face inférieure 602 en regard l'une de l'autre, présentes sur toute la circonférence du capteur de sorte à définir un espace dans lequel sont présents les bords externes 511b, 512b et 513b des rondelles 511, 512 et 513. La face inférieure 602 est inclinée par rapport à la direction γ de sorte à permettre le contact simultané de la rondelle 512 et de la rondelle 513 lorsque les rondelles 511, 512 et 513 se déforment vers la face inférieure 602, afin de garantir le fonctionnement du dispositif de sécurité décrit ci-dessous. La face supérieure 601 est inclinée par rapport à la direction γ de sorte à permettre le contact simultané de la rondelle 511 et de la rondelle 512 lorsque les rondelles 511, 512 et 513 se déforment vers la face supérieure 601, afin de garantir le fonctionnement du dispositif de sécurité décrit ci-dessous. Les angles d'inclinaison des faces de la butée par rapport à la direction radiale γ ne sont pas nécessairement identiques. Les angles d'inclinaison des faces de la butée par rapport à la direction radiale γ peuvent être compris entre 10° et 45°.

Le dispositif constitué des portions terminales 511b, 512b et 513b des rondelles 511, 512 et 513 est mobile entre une position ouverte dans laquelle elles autorisent la circulation de liquide entre la première chambre 13a et la deuxième chambre 13b, et deux positions fermées dans lesquelles elles empêchent la circulation de liquide entre les deux chambres.

Le dispositif passe dans sa première position fermée lorsque la première pression P1 devient trop importante suite à une surpression et qu'ainsi la différence de pression ΔP entre la première pression P1 et la deuxième pression P2 (ΔP = P1-P2) atteint une première valeur limite. Le dispositif passe dans cette position fermée par écrasement étanche des portions terminale 512b et 513b des rondelles 512 et 513 contre la face inférieure 602 de la butée 600 sous l'effet de l'augmentation de la première pression P1.

Le dispositif passe dans sa deuxième position fermée lorsque la deuxième pression P2 devient trop importante suite à une surpression et qu'ainsi la différence de pression ΔP entre la deuxième pression P2 et la première pression P1 (ΔP = P2-P1) atteint une deuxième valeur limite. Le dispositif passe dans cette position fermée par écrasement étanche des portions terminales 511b et 512b des rondelles 511 et 512 contre la face supérieure 601 de la butée 600 sous l'effet de l'augmentation de la deuxième pression P2.

Les rondelles 511, 512 et 513 sont réalisées dans un matériau flexible mais solide, dont la limite élastique est importante, afin de permettre le fonctionnement décrit précédemment en cas de surpression. Les rondelles peuvent par exemple être réalisées en acier. Les rondelles peuvent par exemple avoir une limite élastique comprise entre 1100 et 1200 MPa.

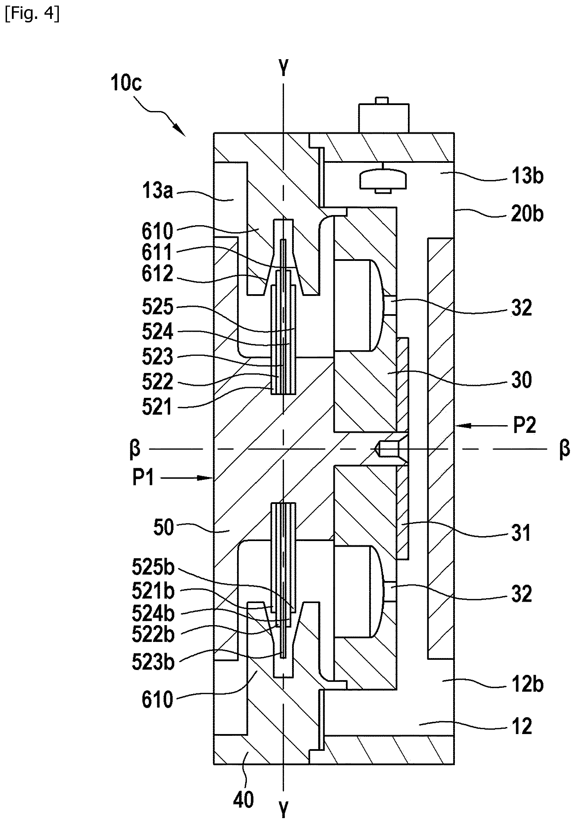

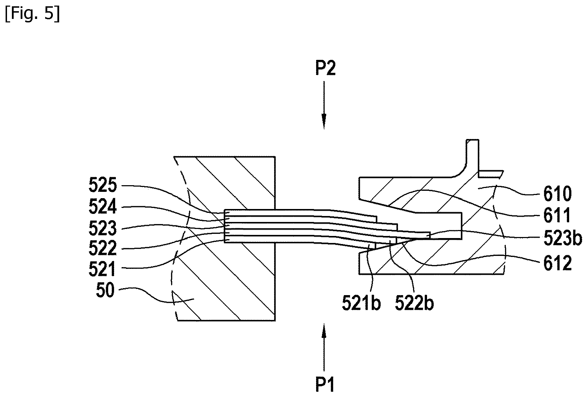

Le capteur de pression 10c présenté sur les figures 4 et 5 comprend un dispositif de sécurité de surpression qui comprend une butée 610 et cinq rondelles 521, 522, 523, 524 et 525 superposées dans l'ordre dans la direction β. Les rondelles 521, 522, 523, 524 et 525 sont fixées sur l'organe central 50 de sorte que les rondelles 521, 522, 523, 524 et 525 et l'organe central 50 soient concentriques. Les rondelles 521, 522, 523, 524 et 525 s'étendent perpendiculairement à l'axe β selon une direction radiale γ. Ainsi, les bords internes 521a, 522a, 523a, 524a et 525a respectivement des rondelles 521, 522, 523, 524 et 525 sont fixés à l'organe central 50, tandis que les bords externes 521b, 522b, 523b, 524b et 525b respectivement des rondelles 521, 522, 523, 524 et 525, appelés également portions terminales, sont libres. Les rondelles 521, 522, 523, 524 et 525 peuvent être fixées à l'organe central par soudage, ou montées grâce à leurs propriétés flexibles.

Les portions libres 522b et 524b des rondelles 522 et 524 sont en retrait selon la direction γ par rapport à la portion libre 523b de la rondelle 523, située entre les rondelles 522 et 524. La portion libre 521b de la rondelle 521 est en retrait selon la direction γ par rapport à la portion libre 522b de la rondelle 522, située entre les rondelles 521 et 523. La portion libre 525b de la rondelle 525 est en retrait selon la direction γ par rapport à la portion libre 524b de la rondelle 524, située entre les rondelles 523 et 525.

La butée 610 est fixée sur le support de fixation 40, de sorte que la butée 610 et les rondelles 521, 522, 523, 524 et 525 soient concentriques. La butée 600 comprend une face supérieure 611 et une face inférieure 612 en regard l'une de l'autre, présentes sur toute la circonférence du capteur de sorte à définir un espace dans lequel sont présents les bords externes 521b, 522b, 523b, 524b et 525b des rondelles 521, 522, 523, 524 et 525. La face inférieure 612 est inclinée par rapport à la direction γ de sorte à permettre le contact simultané des trois premières rondelles 521, 522 et 523 lorsque les rondelles se déforment vers la face inférieure 612, afin de garantir le fonctionnement du dispositif de sécurité décrit ci-dessous. La face supérieure 611 est inclinée par rapport à la direction γ de sorte à permettre le contact simultané des trois dernières rondelles 523, 524 et 525 lorsque les rondelles se déforment vers la face supérieure 611, afin de garantir le fonctionnement du dispositif de sécurité décrit ci-dessous. Les angles d'inclinaison des faces de la butée par rapport à la direction radiale γ ne sont pas nécessairement identiques. Les angles d'inclinaison des faces de la butée par rapport à la direction radiale γ peuvent être compris entre 10° et 45°.

Le dispositif constitué des portions terminales 521b, 522b, 523b, 524b et 525b des rondelles 521, 522, 523, 524 et 525 est mobile entre une position ouverte dans laquelle elles autorisent la circulation de liquide entre la première chambre 13a et la deuxième chambre 13b, et deux positions fermées dans lesquelles elles empêchent la circulation de liquide entre les deux chambres.

Le dispositif passe dans sa première position fermée lorsque la première pression P1 devient trop importante suite à une surpression et qu'ainsi la différence de pression ΔP entre la première pression P1 et la deuxième pression P2 (ΔP = P1-P2) atteint une première valeur limite. Le dispositif passe dans cette position fermée par écrasement étanche des portions terminales 523b, 524b, 525b des trois rondelles 523, 524 et 525 contre la face supérieure 611 de la butée 600 sous l'effet de l'augmentation de la première pression P1.

Le dispositif passe dans sa deuxième position fermée lorsque la deuxième pression P2 devient trop importante suite à une surpression et qu'ainsi la différence de pression ΔP entre la deuxième pression P2 et la première pression P1 (ΔP = P2-P1) atteint une deuxième valeur limite. Le dispositif passe dans cette position fermée par écrasement étanche des portions terminales 521b, 522b et 523b des trois rondelles 521, 522 et 523 contre la face inférieure 612 de la butée 600 sous l'effet de l'augmentation de la deuxième pression P2. Une telle configuration est illustrée sur la figure 5.

Les rondelles 521, 522, 523, 524 et 525 sont réalisées dans un matériau flexible mais solide, dont la limite élastique est importante, afin de permettre le fonctionnement décrit précédemment en cas de surpression. Les rondelles peuvent par exemple être réalisées en acier. Les rondelles peuvent par exemple avoir une limite élastique comprise entre 1100 et 1200 MPa.

## Revendications

1. Capteur de pression (10a ; 10b ; 10c) fermé à une première extrémité par une première membrane (20a) et à une deuxième extrémité par une deuxième membrane (20b), comprenant un organe central (50) suivant un premier axe (β) fixé à au moins une des membranes, le capteur de pression étant **caractérisé en ce que** l'organe central comprend au moins une rondelle flexible concentrique (51) s'étendant à partir de l'organe central selon un deuxième axe (γ) perpendiculaire au premier axe jusqu'à une portion terminale libre flexible (51b), le capteur comprenant en outre une butée (60) présentant une face supérieure (61) et une face inférieure (62) en regard l'une de l'autre et concentriques autour du premier axe, la face supérieure et la face inférieure définissant un espace dans lequel est présent la portion terminale de la rondelle, de sorte que la rondelle soit en contact de façon étanche avec la face inférieure ou la face supérieure lorsque la différence de pression entre une première pression (P1) exercée sur la première membrane et une deuxième pression (P2) exercée sur la deuxième membrane dépasse une valeur seuil.

2. Capteur de pression (10b ; 10c) selon la revendication 1, dans lequel les faces supérieure (61) et inférieure (62) de la butée (60) présentent un angle par rapport au deuxième axe (γ) compris entre 10° et 45°.

3. Capteur de pression (10b ; 10c) selon la revendication 1 ou 2, dans lequel l'organe central (50) comprend une première rondelle flexible (512) présente entre une deuxième rondelle (511) et une troisième rondelle (513) flexibles concentriques à ladite première rondelle, les portions libres (511b, 513b) des deuxième et troisième rondelles étant en retrait par rapport à la portion libre (512b) de la première rondelle afin d'assurer un double contact étanche avec les faces (601, 602) de la butée (600) lorsque la différence de pression entre les deux membranes dépasse la valeur seuil.

4. Capteur de pression (10c) selon l'une quelconque des revendications 1 à 3, dans lequel l'organe central (50) comprend une première rondelle flexible (523) présente entre une deuxième rondelle (522) et une troisième rondelle (524) flexibles concentriques à ladite première rondelle, l'ensemble formé par ces trois rondelles étant lui-même présent entre une quatrième rondelle (521) et une cinquième rondelle (525) flexibles concentriques audit ensemble, les portions libres (521b et 522b, 524b et 525b) des deuxième et quatrième rondelles et des troisième et cinquième rondelles étant en retrait progressif par rapport à la portion libre (523b) de la première rondelle afin d'assurer un triple contact étanche avec les faces (611, 612) de la butée (610) lorsque la différence de pression entre les deux membranes dépasse la valeur seuil.

5. Capteur de pression (10a ; 10b ; 10c) selon l'une quelconque des revendications 1 à 4, contenant de l'huile.

6. Capteur de pression (10a ; 10b ; 10c) selon l'une quelconque des revendications 1 à 5, comprenant un corps de mesure (30) relié mécaniquement à l'une des membranes (20a ; 20b) par l'organe central (50), le corps de mesure comprenant une jauge extensométrique (31) et une forme présentant une symétrie centrale.

## Patentansprüche

1. Drucksensor (10a; 10b; 10c), der an einem ersten Ende durch eine erste Membran (20a) und an einem zweiten Ende durch eine zweite Membran (20b) verschlossen ist, der ein Zentralorgan (50) gemäß einer ersten Achse (β) aufweist, das an mindestens einer der Membranen befestigt ist, wobei der Drucksensor **dadurch gekennzeichnet ist, dass** das Zentralorgan mindestens eine konzentrische flexible Scheibe (51) umfasst, die sich ab dem Zentralorgan gemäß einer zweiten Achse (γ), die senkrecht zur ersten Achse ist, bis zu einem flexiblen freien terminalen Abschnitt (51b) erstreckt, wobei der Sensor ferner einen Anschlag (60) umfasst, der eine obere Fläche (61) und eine untere Fläche (62) aufweist, die einander zugewandt und konzentrisch um die erste Achse sind, wobei die obere Fläche und die untere Fläche einen Raum definieren, in dem der terminale Abschnitt der Scheibe vorhanden ist, so dass die Scheibe mit der unteren Fläche oder der oberen Fläche in dichtem Kontakt ist, wenn der Druckunterschied zwischen einem ersten Druck (P1), der auf die erste Membran ausgeübt wird, und einem zweiten Druck (P2), der auf die zweite Membran ausgeübt wird, einen Grenzwert überschreitet.

2. Drucksensor (10b; 10c) nach Anspruch 1, wobei die obere (61) und untere Fläche (62) des Anschlags (60) einen Winkel im Verhältnis zur zweiten Achse (γ) aufweisen, der zwischen 10° und 45° liegt.

3. Drucksensor (10b; 10c) nach Anspruch 1 oder 2, wobei das Zentralorgan (50) eine erste flexible Scheibe (512) umfasst, die zwischen einer zweiten flexiblen Scheibe (511) und einer dritten flexiblen Scheibe (513) vorhanden sind, die zu der ersten Scheibe konzentrisch sind, wobei die freien Abschnitte (511b, 513b) der zweiten und dritten Scheibe im Verhältnis zum freien Abschnitt (512b) der ersten Scheibe zurückgesetzt sind, um einen doppelten dichten Kontakt mit den Flächen (601, 602) des Anschlags (600) sicherzustellen, wenn der Druckunterschied zwischen den zwei Membranen den Grenzwert überschreitet.

4. Drucksensor (10c) nach einem der Ansprüche 1 bis 3, wobei das Zentralorgan (50) eine erste flexible Scheibe (523) umfasst, die zwischen einer zweiten flexiblen Scheibe (522) und einer dritten flexiblen Scheibe (524) vorhanden ist, die zu der ersten Scheibe konzentrisch sind, wobei die von diesen drei Scheiben gebildete Anordnung selbst zwischen einer vierten flexiblen Scheibe (521) und einer fünften flexiblen Scheibe (525) vorhanden ist, die zu der Anordnung konzentrisch sind, wobei die freien Abschnitte (521b und 522b, 524b und 525b) der zweiten und vierten Scheibe und der dritten und fünften Scheibe im Verhältnis zum freien Abschnitt (523b) der ersten Scheibe fortschreitend zurückgesetzt sind, um einen dreifachen dichten Kontakt mit den Flächen (611, 612) des Anschlags (610) sicherzustellen, wenn der Druckunterschied zwischen den zwei Membranen den Grenzwert überschreitet.

5. Drucksensor (10a; 10b; 10c) nach einem der Ansprüche 1 bis 4, der Öl enthält.

6. Drucksensor (10a; 10b; 10c) nach einem der Ansprüche 1 bis 5, der einen Messkörper (30) umfasst, der mit einer der Membranen (20a; 20b) durch das Zentralorgan (50) mechanisch verbunden ist, wobei der Messkörper einen Dehnungsmessstreifen (31) und eine Form umfasst, die eine Zentralsymmetrie aufweist.

## Claims

1. A pressure sensor (10a; 10b; 10c) closed at a first end by a first membrane (20a) and at a second end by a second membrane (20b), comprising a central member (50) along a first axis (β) fixed to at least one of the membranes, the pressure sensor being **characterized in that** the central member comprises at least one concentric flexible washer (51) extending from the central member along a second axis (γ) perpendicular to the first axis up to a flexible free terminal portion (51b), the sensor further comprising an abutment (60) having an upper face (61) and a lower face (62) facing each other and concentric around the first axis, the upper face and the lower face defining a space in which the terminal portion of the washer is present, so that the washer is in sealing contact with the lower face or the upper face when the pressure difference between a first press (P1) exerted on the first membrane and a second pressure (P2) exerted on the second membrane exceeds a threshold value.

2. The pressure sensor (10b; 10c) according to claim 1, wherein the upper (61) and lower (62) faces of the abutment (60) have an angle relative to the second axis (γ) comprised between 10° and 45°.

3. The pressure sensor (10b; 10c) according to claim 1 or 2, wherein the central member (50) comprises a first flexible washer (512) present between flexible second washer (511) and third washer (513) concentric with said first washer, the free portions (511b, 513b) of the second and third washers being set back from the free portion (512b) of the first washer in order to ensure a double sealed contact with the faces (601, 602) of the abutment (600) when the pressure difference between the two membranes exceeds the threshold value.

4. The pressure sensor (10c) according to any one of claims 1 to 3, wherein the central member (50) comprises a first flexible washer (523) present between flexible second washer (522) and third washer (524) concentric with said first washer, the assembly formed by these three washers being itself present between flexible fourth washer (521) and fifth washer (525) concentric with said assembly, the free portions (521b and 522b, 524b and 525b) of the second and fourth washers and of the third and fifth washers being gradually set back from the free portion (523b) of the first washer in order to ensure triple sealed contact with the faces (611, 612) of the abutment (610) when the pressure difference between the two membranes exceeds the threshold value.

5. The pressure sensor (10a; 10b; 10c) according to any one of claims 1 to 4, containing oil.

6. The pressure sensor (10a; 10b; 10c) according to any one of claims 1 to 5, comprising a measuring body (30) mechanically connected to one of the membranes (20a; 20b) by the central member (50), the measuring body comprising a strain gauge (31) and a shape having a central symmetry.
